# EUROPEAN PATENT APPLICATION

(11) **EP 4 653 998 A1**
(43) Date of publication of application: **26.11.2025**
(21) Application number: 24200178.2
(22) Date of filing: 13.09.2024
(51) Int. Cl.: G06F 3/12

(54) **INFORMATION PROCESSING SYSTEM, PROGRAM, AND INFORMATION PROCESSING METHOD**

(30) Priority: 22.05.2024 JP 2024083607
(71) Applicant: FUJIFILM Business Innovation Corp., Minato-ku Tokyo (JP)
(72) Inventor: MATSUDA, Ryota, Yokohama-shi, Kanagawa (JP)
(74) Representative: Kurig, Thomas

(57) **Abstract**

An information processing system includes a processor configured to accept a setting of whether or not to detect a specific type of abnormality in a printed material output from a printing apparatus and a setting of a process in a case where the specific type of abnormality is detected in the printed material on an identical screen.

## Description

### BACKGROUND OF THE INVENTION

### (i) Field of the Invention

The present disclosure relates to an information processing system, a program, and an information processing method.

### (ii) Description of Related Art

JP2022-137718A discloses an inspection apparatus that is capable of taking appropriate measures according to the type of defect of a printed material.

JP2021-140495A discloses a job processing system that is capable of deciding, for each job, an item to be notified as the quality of a product obtained by executing a job among a plurality of items related to quality.

### SUMMARY OF THE INVENTION

An object of the present disclosure is to provide an information processing system, a program, and an information processing method that prevent occurrence of errors of a setting of whether or not to detect an abnormality and a setting of a process in a case where the abnormality is detected, as compared with a case where the setting of whether or not to detect the abnormality and the setting of a process in a case where the abnormality is detected are accepted on different screens.

According to a first aspect of the present disclosure, there is provided an information processing system including a processor configured to accept a setting of whether or not to detect a specific type of abnormality in a printed material output from a printing apparatus and a setting of a process in a case where the specific type of abnormality is detected in the printed material on an identical screen.

In the information processing system according to a second aspect of the present disclosure, in the information processing system according to the first aspect, the specific type of abnormality may include a color density fluctuation and a misalignment of printing.

In the information processing system according to a third aspect of the present disclosure, in the information processing system according to the second aspect, the setting of the process in a case where the specific type of abnormality is detected may include whether or not to correct a color density and whether or not to correct the misalignment of printing.

In the information processing system according to a fourth aspect of the present disclosure, in the information processing system according to any one of the first to third aspects, a setting of a process in a case where an abnormality is detected may include executing any one of continuing printing by the printing apparatus or stopping the printing by the printing apparatus and waiting for an instruction input from a user.

In the information processing system according to a fifth aspect of the present disclosure, in the information processing system according to any one of the first to fourth aspects, the processor may be configured to accept a setting of a threshold value in a case of detecting an abnormality on the identical screen together.

In the information processing system according to a sixth aspect of the present disclosure, in the information processing system according to the fifth aspect, the processor may be configured to display a slider for setting the threshold value on the identical screen.

In the information processing system according to a seventh aspect of the present disclosure, in the information processing system according to any one of the first to sixth aspects, the processor may be configured to record, for each printing job for the printing apparatus, the setting of whether or not to detect the specific type of abnormality and the setting of the process in a case where the specific type of abnormality is detected in the printed material in association with each other.

According to an eighth aspect of the present disclosure, there is provided a program causing a computer to execute accepting a setting of whether or not to detect a specific type of abnormality in a printed material output from a printing apparatus and a setting of a process in a case where the specific type of abnormality is detected in the printed material on an identical screen.

According to a ninth aspect of the present disclosure, there is provided an information processing method including accepting a setting of whether or not to detect a specific type of abnormality in a printed material output from a printing apparatus and a setting of a process in a case where the specific type of abnormality is detected in the printed material on an identical screen.

According to the information processing system of the first aspect of the present disclosure, it is possible to prevent occurrence of errors of a setting of whether or not to detect an abnormality and a setting of a process in a case where the abnormality is detected, as compared with a case where the setting of whether or not to detect the abnormality and the setting of a process in a case where the abnormality is detected are accepted on different screens.

According to the information processing system of the second aspect of the present disclosure, a setting related to the color density fluctuation and the misalignment of the printing can be accepted on the identical screen.

According to the information processing system of the third aspect of the present disclosure, a setting related to whether or not to correct the color density and a setting related to whether or not to correct the misalignment of the printing can be accepted on the identical screen.

According to the information processing system of the fourth aspect of the present disclosure, in a case where the abnormality is detected, a setting of whether to continue the printing by the printing apparatus or to stop the printing by the printing apparatus and wait for the instruction input from the user can be accepted on the identical screen.

According to the information processing system of the fifth aspect of the present disclosure, the setting of the threshold value in the case of detecting an abnormality can be accepted on the identical screen.

According to the information processing system of the sixth aspect of the present disclosure, the setting of the threshold value in the case of detecting an abnormality can be accepted by a slider.

According to the information processing system of the seventh aspect of the present disclosure, a setting appropriate to each printing job can be made.

According to the program of the eighth aspect of the present disclosure, it is possible to prevent occurrence of errors of a setting of whether or not to detect an abnormality and a setting of a process in a case where the abnormality is detected, as compared with a case where the setting of whether or not to detect the abnormality and the setting of a process in a case where the abnormality is detected are accepted on different screens.

According to the information processing method of the ninth aspect of the present disclosure, it is possible to prevent occurrence of errors of a setting of whether or not to detect an abnormality and a setting of a process in a case where the abnormality is detected, as compared with a case where the setting of whether or not to detect the abnormality and the setting of a process in a case where the abnormality is detected are accepted on different screens.

### BRIEF DESCRIPTION OF THE DRAWINGS

Exemplary embodiment(s) of the present invention will be described in detail based on the following figures, wherein:
Fig. 1 is a diagram showing a system configuration of a printing system according to an exemplary embodiment of the present disclosure;
Fig. 2 is a block diagram showing a hardware configuration of the printing system;
Fig. 3 is a diagram showing an example of a job setting screen in the printing system;
Fig. 4 is a transition diagram for describing a flow of a process in a case where a printing job is executed in the printing system;
Fig. 5 is a transition diagram for describing a flow of a process in a case where a printing job is executed in the printing system;
Fig. 6 is a diagram showing an example of a job setting screen in the printing system;
Fig. 7 is a transition diagram for describing a flow of a process in a case where a printing job is executed in the printing system;
Fig. 8 is a diagram showing an example of a job setting screen in the printing system; and
Fig. 9 is a transition diagram for describing a flow of a process in a case where a printing job is executed in the printing system.

### DETAILED DESCRIPTION OF THE INVENTION

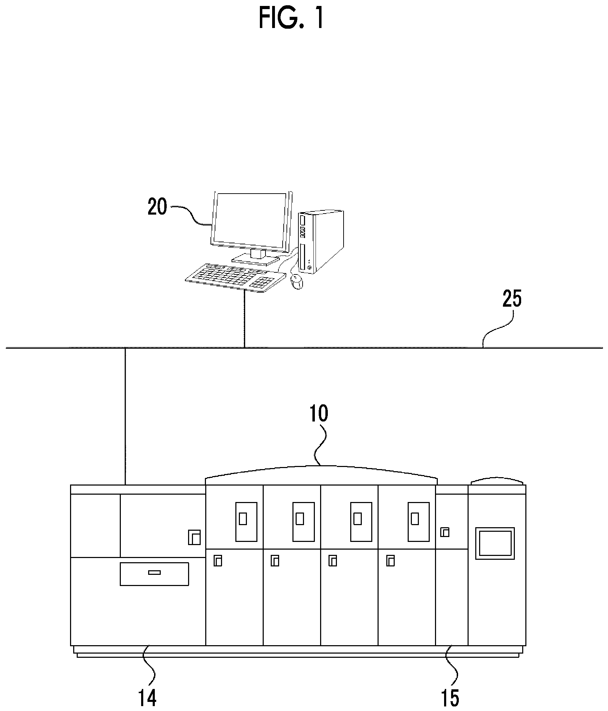

Hereinafter, an exemplary embodiment for embodying the technique of the present disclosure will be described in detail with reference to the drawings. Fig. 1 is a diagram showing a system configuration of a printing system 10 that is an exemplary embodiment of an information processing system of the present disclosure.

As shown in Fig. 1, the printing system 10 includes a printing apparatus 14 and an inspection apparatus 15 that is used to perform quality inspection on a printed material printed by the printing apparatus 14.

In the printing system 10, a printed material printed by the printing apparatus 14 is transported to the inspection apparatus 15 and is scanned by the inspection apparatus 15.

The printing system 10 can evaluate the quality of the printed material by comparing an original print image with a scanned image acquired by scanning the printed material printed by the printing apparatus 14 with the inspection apparatus 15.

In addition, a user terminal 20 is connected to the printing system 10 via a network 25. The user terminal 20 is a terminal that transmits a printing job to the printing system 10.

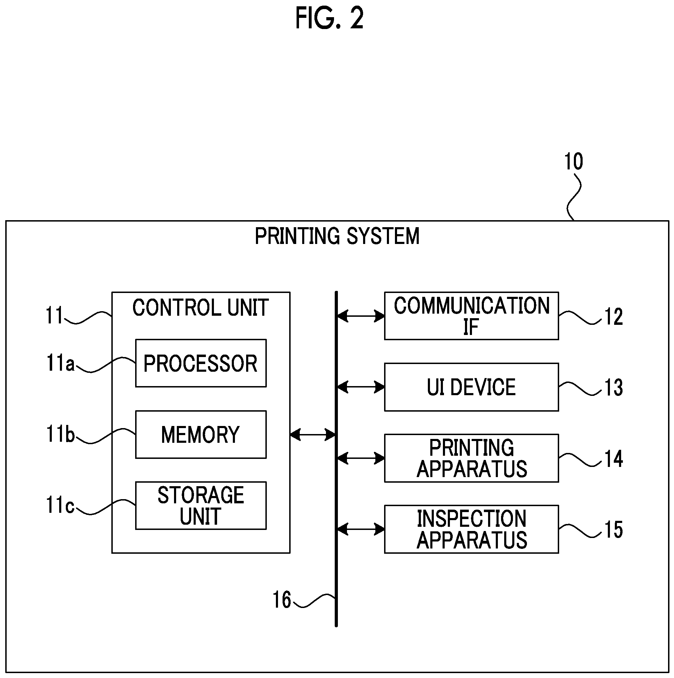

Next, the hardware configuration of the printing system 10 of the present exemplary embodiment will be described. Fig. 2 is a block diagram showing a hardware configuration of the printing system 10.

As shown in Fig. 2, the printing system 10 includes a control unit 11, a communication interface (abbreviated as an IF) 12, a user interface (abbreviated as a UI) device 13 including a touch panel or a liquid crystal display and a keyboard, the printing apparatus 14, and the inspection apparatus 15. These components are connected to each other via a control bus 16.

The control unit 11 includes a processor 11a, a memory 11b, and a storage unit 11c. The processor 11a executes a predetermined process based on a control program read out from the storage unit 11c and developed in the memory 11b. The storage unit 11c is configured with, for example, a Read Only Memory (ROM), a Hard Disk Drive (HDD), a Solid State Drive (SSD), and the like, and stores a control program, necessary software, data, and the like.

In the present exemplary embodiment, the processor 11a is described as reading out and executing the program stored in the storage unit 11c, but the present disclosure is not limited thereto. The program may be provided in the form of being recorded on a computer-readable recording medium. For example, the program may be provided in a form of being recorded on an optical disc such as a Compact Disc (CD)-Read Only Memory (ROM) or a Digital Versatile Disc (DVD)-ROM, or in a form of being recorded on a semiconductor memory such as a Universal Serial Bus (USB) memory and a memory card. In addition, the program may be acquired from an external apparatus via a communication line.

The communication IF 12 transmits and receives data to and from an external device or the like. The UI device 13 accepts an instruction input from a user. The printing apparatus 14 prints an image on a recording medium such as printing paper through processes such as charging, exposure, development, transfer, and fixing. The inspection apparatus 15 reads the printed material printed by the printing apparatus 14 as image data.

In the printing system 10 according to the present exemplary embodiment, it is possible to perform a setting of whether or not to detect a specific type of abnormality in the printed material output from the printing apparatus 14 and setting of a process in a case where the specific type of abnormality is detected in the printed material.

However, in a case where these two types of settings are accepted on different screens, a setting error is induced, which leads to a decrease in productivity. As the setting error, for example, it is considered that the job processing is set to be continued with respect to a serious defect or the job processing is set to be stopped with respect to a minor defect.

In order to address such a problem, in the printing system 10 according to the present exemplary embodiment, the control unit 11 accepts the setting of whether or not to detect the specific type of abnormality in the printed material output from the printing apparatus 14 and the setting of a process in a case where the specific type of abnormality is detected in the printed material on the identical screen.

Here, the "on the identical screen" means "on one operation screen". In a case where a plurality of windows can be simultaneously displayed on one operation screen, the two types of settings may be accepted on one window, or the two types of settings may be individually accepted on a plurality of windows.

In the printing system 10 according to the present exemplary embodiment, the specific type of abnormality may include a color density fluctuation and a misalignment of printing. In this case, the setting of the process in a case where a specific type of abnormality is detected may include whether or not to correct the color density fluctuation and whether or not to correct the misalignment of printing.

In addition, the setting of the process in a case where the abnormality is detected may include executing any one of continuing the printing by the printing apparatus 14 or stopping the printing by the printing apparatus 14 and waiting for an instruction input from the user.

In addition, the control unit 11 may accept the setting of a threshold value in a case of detecting an abnormality on the identical screen. In this case, the control unit 11 may display a slider for setting the threshold value on the identical screen.

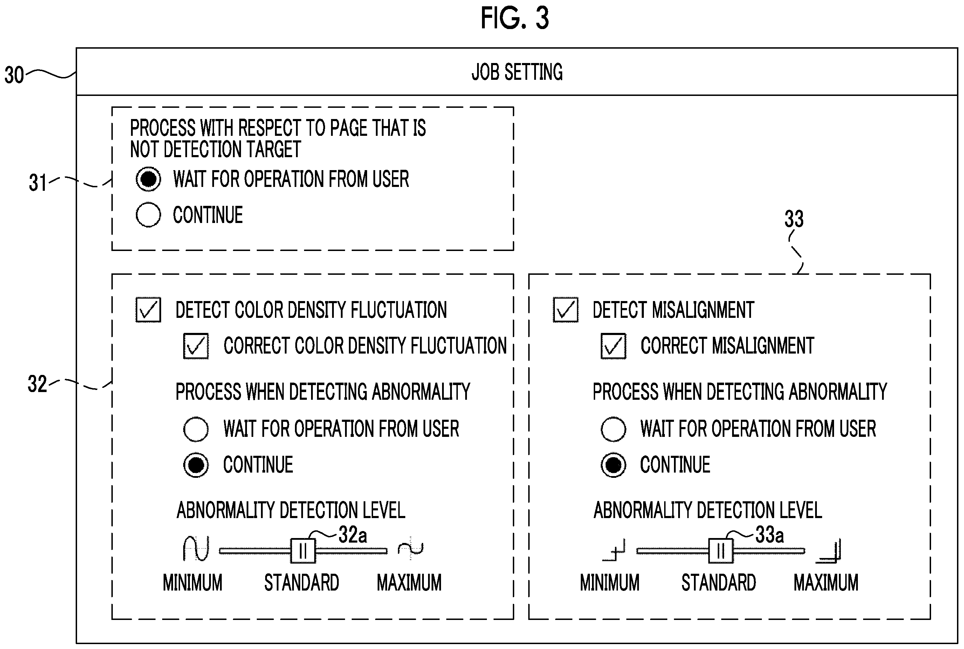

Hereinafter, an example of the job setting screen 30 in the printing system 10 according to the present exemplary embodiment will be described in detail with reference to Fig. 3.

As shown in Fig. 3, the job setting screen 30 includes a setting unit 31, a color density fluctuation setting unit 32, and a misalignment setting unit 33.

The setting unit 31 is a region for performing the setting of a process with respect to a page that is not a detection target in the inspection apparatus 15.

Specifically, in a case where a page that is not a detection target is detected in the inspection apparatus 15, the setting unit 31 is configured to be able to perform selection input of whether to stop printing by the printing apparatus 14 and wait for an instruction input from the user (displayed as "wait for an operation from the user" in Fig. 3) or to continue printing by the printing apparatus 14 (displayed as "continue" in Fig. 3).

The color density fluctuation setting unit 32 is a region for performing the setting related to the color density fluctuation. Specifically, the color density fluctuation setting unit 32 is configured to be able to perform selection input of whether or not to detect the color density fluctuation (hereinafter, may be referred to as an abnormality) by a check box.

In addition, in a case where the color density fluctuation is detected, the color density fluctuation setting unit 32 is configured to be able to perform selection input of whether or not to correct the color density fluctuation by a check box.

In addition, in a case where the abnormality is detected, the color density fluctuation setting unit 32 is configured to be able to perform selection input of whether to stop printing by the printing apparatus 14 and wait for an instruction input from the user (displayed as "wait for an operation from the user" in Fig. 3) or to continue printing by the printing apparatus 14 (displayed as "continue" in Fig. 3).

In addition, the color density fluctuation setting unit 32 is configured to be able to input a level (that is, a threshold value) in a case of detecting an abnormality by the slider 32a.

The correction of the color density fluctuation is performed regardless of the setting content of the level in a case of detecting the abnormality. The correction of the color density fluctuation is performed, for example, as follows. First, the color of a patch printed for correction is measured by the inspection apparatus 15, and the correction is performed in a case where deviation occurs from the average of first to tenth sheets. The correction process is performed such that the average of the measurement results of the immediately preceding 10 sheets by the inspection apparatus 15 approaches the average of the first to tenth sheets. In a case where there are no measurement results of the 10 sheets, the correction process is not performed.

The misalignment setting unit 33 is a region for performing the setting related to the misalignment. Specifically, the misalignment setting unit 33 is configured to be able to perform selection input of whether or not to detect the misalignment (hereinafter, may be referred to as an abnormality) by a check box.

In addition, in a case where the misalignment is detected, the misalignment setting unit 33 is configured to be able to perform selection input of whether or not to correct the misalignment by a check box.

In addition, in a case where the abnormality is detected, the misalignment setting unit 33 is configured to be able to perform a selection input of whether to stop printing by the printing apparatus 14 and wait for an instruction input from the user (displayed as "wait for an operation from the user" in Fig. 3) or to continue printing by the printing apparatus 14 (displayed as "continue" in Fig. 3).

In addition, the misalignment setting unit 33 is configured to be able to input a level (that is, a threshold value) in a case of detecting the abnormality by the slider 33a.

The correction of the misalignment is performed regardless of the setting content of the level in a case of detecting the abnormality. The correction of the misalignment is performed, for example, as follows. In a case of one-sided (front surface) printing, the correction is performed in a case where a deviation occurs from the first sheet with reference to the trim mark printed for correction. In a case of two-sided printing, the correction is performed on the back surface to be the same as the front surface in a case where a deviation occurs from the front surface. The second to ninth sheets are added as a result to be used for the correction each time the paper passes through the inspection apparatus 15. In and after the tenth sheet, the correction process is performed based on the measurement results of the immediately preceding 10 sheets by the inspection apparatus 15.

In addition, inspection items to be performed and the threshold values of the inspections are assumed to be different depending on the characteristics of the printing job. In a case where the inspection is performed with a uniform setting with respect to all the printing jobs, for example, the misalignment may be detected with respect to the printing job in which the misalignment is not a serious defect, which may lead to a decrease in productivity.

Therefore, the control unit 11 may record, for each printing job with respect to the printing apparatus 14, the setting of whether or not to detect the specific type of abnormality and the setting of the process in a case where the specific type of abnormality is detected in the printed material in association with each other.

Next, a flow of a process in a case where a printing job is executed in the printing system 10 according to the present exemplary embodiment will be described.

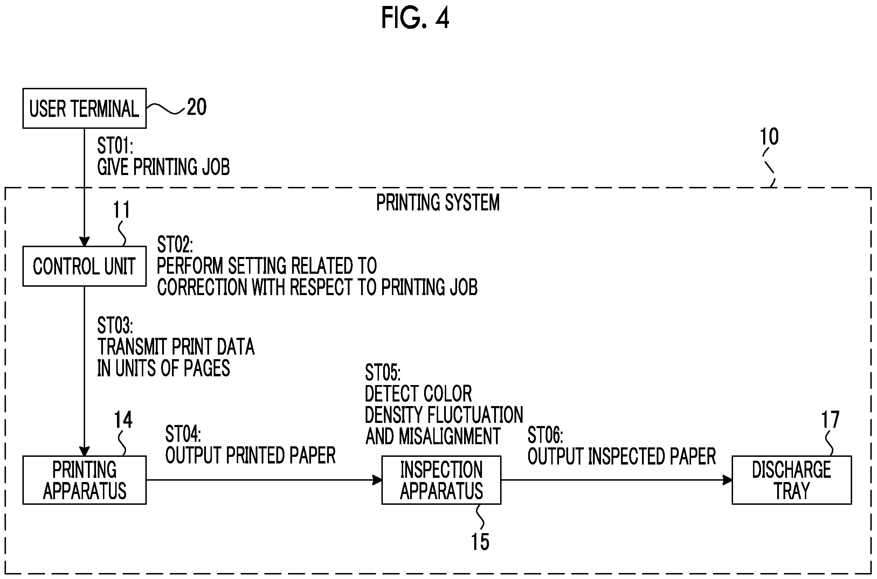

As shown in Fig. 3, the flow of the process in a case where "correct color density fluctuation" and "correct misalignment" are enabled on the job setting screen 30 and no abnormality is detected in the inspection apparatus 15 is as shown in the transition diagram shown in Fig. 4.

As shown in Fig. 4, first, in step ST01, a printing job is given from the user terminal 20 to the control unit 11.

Next, in step ST02, the control unit 11 performs the setting related to the correction with respect to the printing job via the job setting screen 30.

Next, in step ST03, the control unit 11 transmits print data to the printing apparatus 14 in units of pages.

Next, in step ST04, the printing apparatus 14 performs printing using the print data and outputs the printed paper to the inspection apparatus 15.

Next, in step ST05, the inspection apparatus 15 detects the color density fluctuation and the misalignment by scanning the printed paper and comparing the scanned data with the print data.

Next, in step ST06, the inspection apparatus 15 outputs the inspected printed paper to the discharge tray 17.

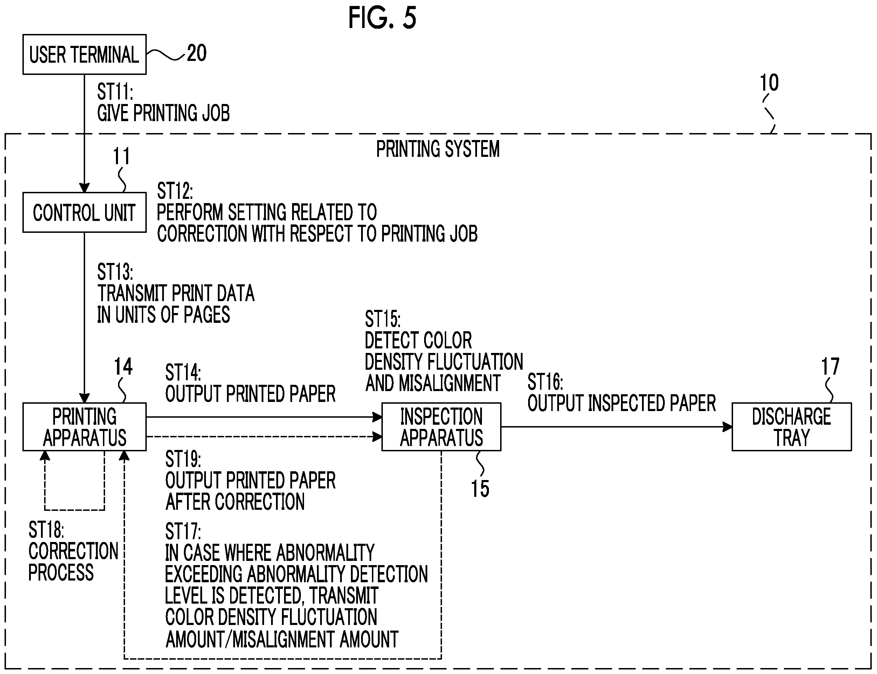

In addition, as shown in Fig. 3, the flow of the process in a case where "correct color density fluctuation" and "correct misalignment" are enabled on the job setting screen 30 and an abnormality is detected in the inspection apparatus 15 is as shown in the transition diagram shown in Fig. 5. In the transition diagram shown in Fig. 5, the dotted line indicates the process that occurs in a case of detecting the abnormality.

As shown in Fig. 5, first, in step ST11, the printing job is given from the user terminal 20 to the control unit 11.

Next, in step ST12, the control unit 11 performs the setting related to correction with respect to the printing job via the job setting screen 30.

Next, in step ST13, the control unit 11 transmits the print data to the printing apparatus 14 in units of pages.

Next, in step ST14, the printing apparatus 14 performs printing using the print data and outputs the printed paper to the inspection apparatus 15.

Next, in step ST15, the inspection apparatus 15 detects the color density fluctuation and the misalignment by scanning the printed paper and comparing the scanned data with the print data.

Next, in step ST16, the inspection apparatus 15 outputs the inspected printed paper to the discharge tray 17.

In addition, in step ST17, in a case where the abnormality exceeding an abnormality detection level is detected, the inspection apparatus 15 transmits the color density fluctuation amount and the misalignment amount exceeding the abnormality detection level to the printing apparatus 14.

Next, in step ST18, the printing apparatus 14 corrects the color density and the position during printing by using the color density fluctuation amount and the misalignment amount.

Next, in step ST19, the printing apparatus 14 performs printing again using the print data corresponding to the printed paper on which the abnormality is detected, and outputs the printed paper to the inspection apparatus 15.

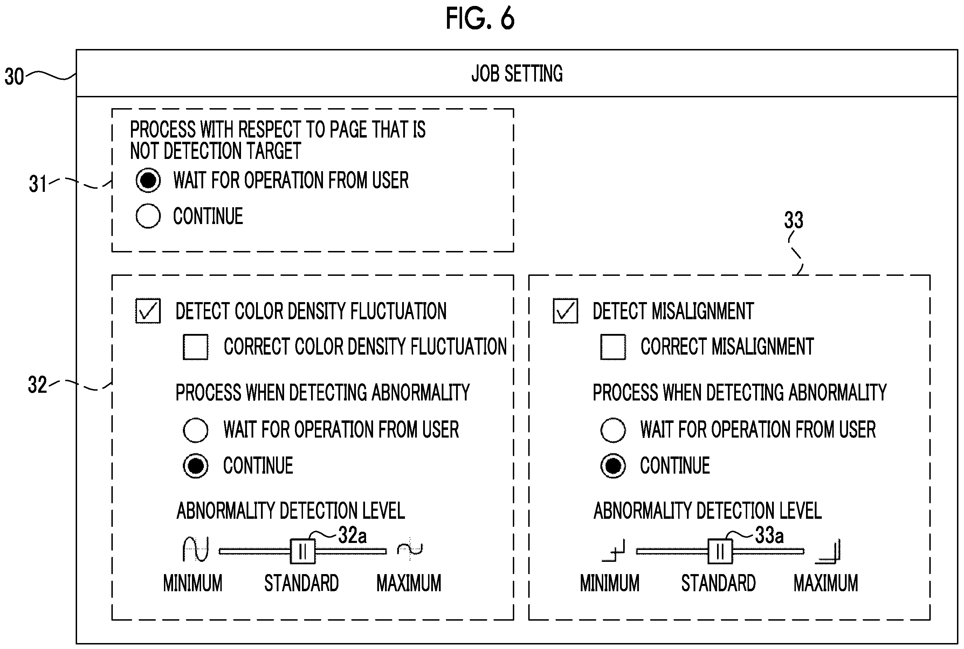

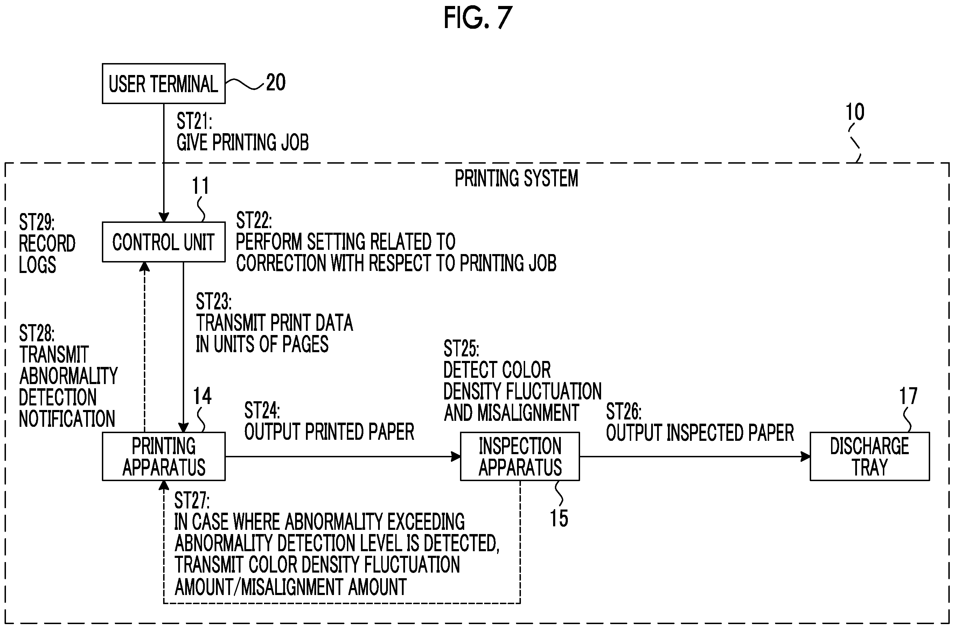

In addition, as shown in Fig. 6, the flow of the process in a case where "correct color density fluctuation" and "correct misalignment" are disabled on the job setting screen 30 and "continue" is selected as the process in a case of detecting the abnormality is as shown in the transition diagram of Fig. 7. In the transition diagram shown in Fig. 7, the dotted line indicates the process that occurs in a case of detecting the abnormality.

As shown in Fig. 7, first, in step ST21, the printing job is given from the user terminal 20 to the control unit 11.

Next, in step ST22, the control unit 11 performs the setting related to correction with respect to the printing job via the job setting screen 30.

Next, in step ST23, the control unit 11 transmits the print data to the printing apparatus 14 in units of pages.

Next, in step ST24, the printing apparatus 14 performs printing using the print data and outputs the printed paper to the inspection apparatus 15.

Next, in step ST25, the inspection apparatus 15 detects the color density fluctuation and the misalignment by scanning the printed paper and comparing the scanned data with the print data.

Next, in step ST26, the inspection apparatus 15 outputs the inspected printed paper to the discharge tray 17.

In addition, in step ST27, in a case where the abnormality exceeding an abnormality detection level is detected, the inspection apparatus 15 transmits the color density fluctuation amount and the misalignment amount exceeding the abnormality detection level to the printing apparatus 14.

Next, in step ST28, the printing apparatus 14 transmits a notification indicating that the abnormality has been detected to the control unit 11.

Next, in step ST29, the control unit 11 records the content of the abnormality in the logs.

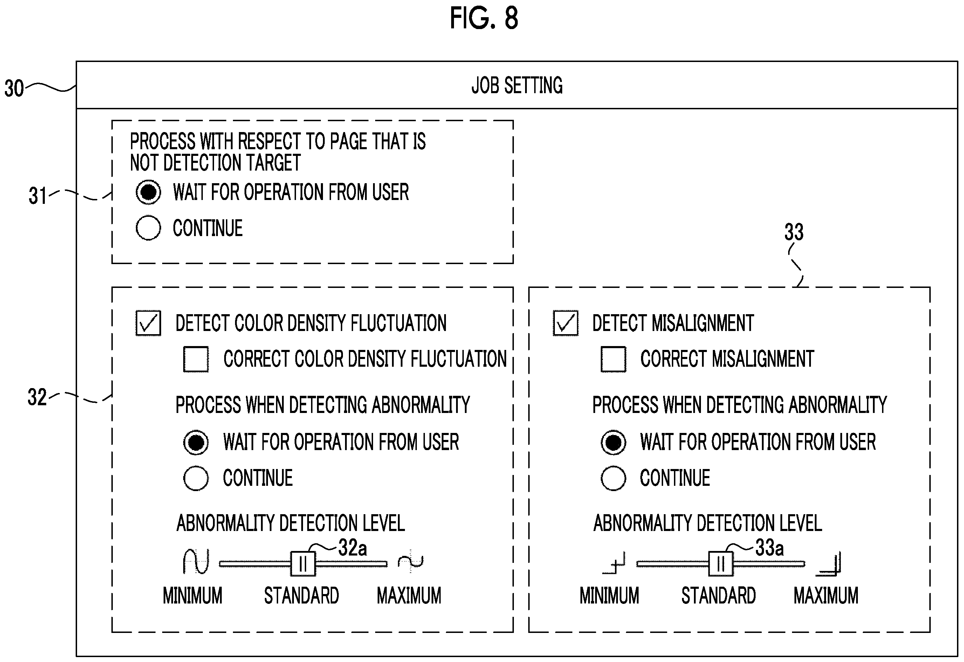

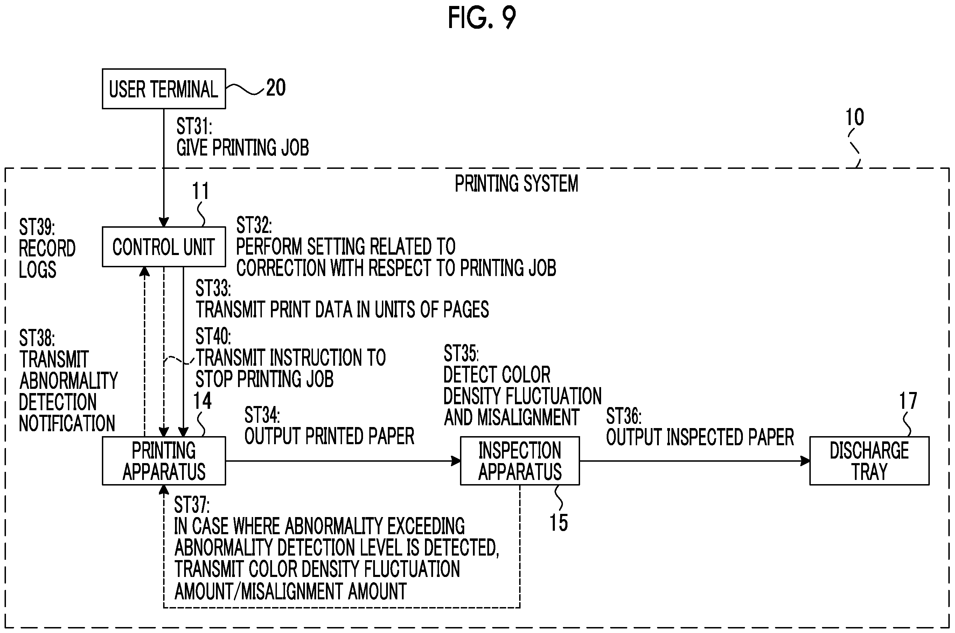

In addition, as shown in Fig. 8, the flow of a process in a case where "correct color density fluctuation" and "correct misalignment" are disabled on the job setting screen 30 and "wait for operation from user" is selected as the process in a case of detecting the abnormality is as shown in a transition diagram of Fig. 9. In the transition diagram shown in Fig. 7, the dotted line indicates the process that occurs in a case of detecting the abnormality.

As shown in Fig. 9, first, in step ST31, the printing job is given from the user terminal 20 to the control unit 11.

Next, in step ST32, the control unit 11 performs the setting related to the correction with respect to the printing job via the job setting screen 30.

Next, in step ST33, the control unit 11 transmits the print data to the printing apparatus 14 in units of pages.

Next, in step ST34, the printing apparatus 14 performs printing using the print data and outputs the printed paper to the inspection apparatus 15.

Next, in step ST35, the inspection apparatus 15 detects the color density fluctuation and the misalignment by scanning the printed paper and comparing the scanned data with the print data.

Next, in step ST36, the inspection apparatus 15 outputs the inspected printed paper to the discharge tray 17.

In addition, in step ST37, in a case where the abnormality exceeding an abnormality detection level is detected, the inspection apparatus 15 transmits the color density fluctuation amount and the misalignment amount exceeding the abnormality detection level to the printing apparatus 14.

Next, in step ST38, the printing apparatus 14 transmits a notification indicating that the abnormality has been detected to the control unit 11.

Next, in step ST39, the control unit 11 records the content of the abnormality in the logs.

Next, in step ST40, the control unit 11 transmits an instruction to stop the printing job to the printing apparatus 14.

### [Modification Example]

Although the printing system 10 which is one exemplary embodiment of the information processing system according to the present disclosure has been described above, the technology of the present disclosure is not limited to the above-described exemplary embodiment and can be modified as appropriate.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### [Supplementary Note]

Regarding the exemplary embodiment described above, the following supplementary notes are further disclosed.
(((1))) An information processing system comprising:
   a processor configured to:
   accept a setting of whether or not to detect a specific type of abnormality in a printed material output from a printing apparatus and a setting of a process in a case where the specific type of abnormality is detected in the printed material on an identical screen.
(((2))) The information processing system according to (((1))),
   wherein the specific type of abnormality includes a color density fluctuation and a misalignment of printing.
(((3))) The information processing system according to (((2))),
   wherein the setting of the process in a case where the specific type of abnormality is detected includes whether or not to correct a color density and whether or not to correct the misalignment of printing.
(((4))) The information processing system according to any one of (((1))) to (((3))),
   wherein a setting of a process in a case where an abnormality is detected includes executing any one of continuing printing by the printing apparatus or stopping the printing by the printing apparatus and waiting for an instruction input from a user.
(((5))) The information processing system according to any one of (((1))) to (((4))), wherein the processor is configured to:
   accept a setting of a threshold value in a case of detecting an abnormality on the identical screen together.
(((6))) The information processing system according to (((5))), wherein the processor is configured to:
   display a slider for setting the threshold value on the identical screen.
(((7))) The information processing system according to any one of (((1))) to (((6))), wherein the processor is configured to:
   record, for each printing job for the printing apparatus, the setting of whether or not to detect the specific type of abnormality and the setting of the process in a case where the specific type of abnormality is detected in the printed material in association with each other.
(((8))) A program causing a computer to execute accepting a setting of whether or not to detect a specific type of abnormality in a printed material output from a printing apparatus and a setting of a process in a case where the specific type of abnormality is detected in the printed material on an identical screen.

The effects of the configuration of the supplementary notes will be described below.

According to the information processing system of (((1))), it is possible to prevent occurrence of errors of a setting of whether or not to detect an abnormality and a setting of a process in a case where the abnormality is detected, as compared with a case where the setting of whether or not to detect the abnormality and the setting of a process in a case where the abnormality is detected are accepted on different screens.

According to the information processing system of (((2))), a setting related to the color density fluctuation and the misalignment of the printing can be accepted on the identical screen.

According to the information processing system of (((3))), a setting related to whether or not to correct the color density and a setting related to whether or not to correct the misalignment of the printing can be accepted on the identical screen.

According to the information processing system of (((4))), in a case where the abnormality is detected, a setting of whether to continue the printing by the printing apparatus or to stop the printing by the printing apparatus and wait for the instruction input from the user can be accepted on the identical screen.

According to the information processing system of (((5))), the setting of the threshold value in the case of detecting an abnormality can be accepted on the identical screen.

According to the information processing system (((6))), the setting of the threshold value in the case of detecting an abnormality can be accepted by a slider.

According to the information processing system of (((7))), a setting appropriate to each printing job can be made.

According to the program of (((8))), it is possible to prevent occurrence of errors of a setting of whether or not to detect an abnormality and a setting of a process in a case where the abnormality is detected, as compared with a case where the setting of whether or not to detect the abnormality and the setting of a process in a case where the abnormality is detected are accepted on different screens.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: printing system
11: control unit
11a: processor
11b: memory
11c: storage unit
12: communication interface
13: user interface device
14: printing apparatus
15: inspection apparatus
16: control bus
17: discharge tray
20: user terminal
25: network
30: job setting screen
31: setting unit
32: color density fluctuation setting unit
32a: slider
33: misalignment setting unit
33a: slider

## Claims

1. An information processing system comprising:
a processor configured to:
accept a setting of whether or not to detect a specific type of abnormality in a printed material output from a printing apparatus and a setting of a process in a case where the specific type of abnormality is detected in the printed material on an identical screen.

2. The information processing system according to claim 1,
wherein the specific type of abnormality includes a color density fluctuation and a misalignment of printing.

3. The information processing system according to claim 2,
wherein the setting of the process in a case where the specific type of abnormality is detected includes whether or not to correct a color density and whether or not to correct the misalignment of printing.

4. The information processing system according to any one of claims 1 to 3,
wherein a setting of a process in a case where an abnormality is detected includes executing any one of continuing printing by the printing apparatus or stopping the printing by the printing apparatus and waiting for an instruction input from a user.

5. The information processing system according to any one of claims 1 to 4, wherein the processor is configured to:
accept a setting of a threshold value in a case of detecting an abnormality on the identical screen together.

6. The information processing system according to claim 5, wherein the processor is configured to:
display a slider for setting the threshold value on the identical screen.

7. The information processing system according to any one of claims 1 to 6, wherein the processor is configured to:
record, for each printing job for the printing apparatus, the setting of whether or not to detect the specific type of abnormality and the setting of the process in a case where the specific type of abnormality is detected in the printed material in association with each other.

8. A program causing a computer to execute accepting a setting of whether or not to detect a specific type of abnormality in a printed material output from a printing apparatus and a setting of a process in a case where the specific type of abnormality is detected in the printed material on an identical screen.

9. An information processing method comprising:
accepting a setting of whether or not to detect a specific type of abnormality in a printed material output from a printing apparatus and a setting of a process in a case where the specific type of abnormality is detected in the printed material on an identical screen.
